# EUROPÄISCHE PATENTSCHRIFT

(11) **EP 1 810 897 B1**
(45) Veröffentlichungstag und Bekanntmachung des Hinweises auf die Patenterteilung: **15.09.2010**
(21) Anmeldenummer: 07107915.6
(22) Anmeldetag: 05.07.2000
(51) Int. Cl.: B60S 1/08, B60Q 1/14, G01N 21/43

(54) **Sensoreinrichtung zur Erfassung einer Benetzung auf einer Scheibe**
Sensing device for detecting wetness on a glass pane
Dispositif détecteur pour la détection du mouillage sur une vitre

(30) Priorität: 17.07.1999 DE 19933641
(43) Veröffentlichungstag der Anmeldung: 25.07.2007
(62) Teilanmeldung aus: 00952910.8
(73) Patentinhaber: ROBERT BOSCH GMBH, 70442 Stuttgart (DE)
(72) Erfinder: Schmitt, Patrick, 77839 Lichtenau (DE); Hog, Norbert, 77815 Buehl (DE); Gille, Andreas, 77815 Buehl (DE); Hodapp, Bruno, 77855 Achern-Oensbach (DE); Michenfelder, Gebhard, 77839 Lichtenau (DE); Pientka, Rainer, 77871 Renchen (DE); Meier, Hans, 77833 Ottersweier (DE); Blitzke, Henry, 77815 Buehl (DE); Burkart, Manfred, 76473 Iffezheim (DE)

(56) Entgegenhaltungen:
- DE-A- 19 815 748
- DE-A1- 19 701 258
- US-A- 5 661 303
- US-A- 5 898 183

## Beschreibung

### Stand der Technik

Die Erfindung geht aus von einer Sensoreinrichtung zur Erfassung einer Benetzung einer Scheibe nach dem Oberbegriff des Hauptanspruchs. Eine solche Einrichtung ist aus der US 5 661 303 A bekannt.

Aus der DE 197 01 258 A1 ist eine Sensoreinrichtung zur Steuerung von Wisch-Waschanlagen für Kraftfahrzeugscheiben bekannt geworden, die nach einem optoelektronischen Prinzip funktioniert. Die Sensoreinrichtung weist mehrere Sender und mindestens einen Empfänger auf, die über ein Koppelmittel eine definierte Strahlung in die Scheibe ein- und auskoppeln, deren Benetzung durch Feuchtigkeit oder Verschmutzung gemessen werden soll. Die Sender sind konzentrisch auf dem Koppelmittel um den Empfänger oder abschnittsweise konzentrisch angeordnet, wobei das Koppelmittel kreis- oder ringförmig ausgestaltet ist. Durch Sender, Empfänger und Koppelmittel wird somit eine kreisförmige Grundfläche aufgespannt. Aufgrund dessen ist der Sensor bzw. das Sensorgehäuse kreiszylinderförmig ausgestaltet.

### Vorteile der Erfindung

Die Empfangsoptik einer automatischen Lichtsteuerung (ALS) wie sie beispielsweise in der DE 196 30 216 C2 beschrieben ist, kann durch eine Richtungs- und Globalsensorik ein weites Umfeld des Fahrzeugs erfassen. So können beispielsweise Tunneleinfahrten durch die nach vorn gerichteten Erfassungskegel der Richtungssensorik rechtzeitig vor der Einfahrt erkannt werden. Durch die bevorzugte trapezförmige Anordnung der Sender und Empfänger der erfindungsgemäßen Sensoreinrichtung bleibt im Zentrum des Sensors für die Empfangsoptik trotz der kompakten Bauform genügend Raum. Hierbei erweist es sich als vorteilhaft, daß das Trapez eine größere und eine kleinere Parallele umfaßt, da die Empfangsoptik sich so zusätzlich in Richtung der größeren Parallelen erstrecken kann, ohne die Gesamtabmessungen des Sensors zu vergrößern.

Weitere Vorteile der Erfindung ergeben sich aus den kennzeichnenden Merkmalen der Unteransprüche.

Durch die Verwendung mehrerer Empfänger pro Sender wird die Anzahl der Meßstrecken und damit die Anzahl der sensitiven Flächen erhöht, was einen Kostenvorteil ergibt. Derselbe Effekt tritt auf, wenn mehrere Sender und nur ein Empfänger verwendet werden. Werden zwei Sender und zwei Empfänger eingesetzt, können vier Meßstrecken und damit vier sensitive Flächen erzielt werden. Ist der Abstand der zwei Sender zueinander von dem Abstand der zwei Empfänger zueinander etwa doppelt so groß, ergibt sich eine besonders gleichmäßige Anordnung der sensitiven Flächen.

Weiter erweist es sich als vorteilhaft, die Sensoreinrichtung so auf der Scheibe zu befestigen, daß die Sender in Einbaulage auf der unteren Parallelen und die Empfänger auf der oberen Parallelen eines Trapezes angeordnet sind. Sonneneinstrahlung, die vorzugsweise von oben erfolgt und störendes Fremdlicht darstellt, kann so auf den Empfängern minimiert werden.

Durch die verbesserten Eigenschaften, insbesondere durch das verbesserte Verhältnis zwischen sensitiver Fläche und Auflagefläche, kann die Auflagefläche des Sensors verringert werden, wodurch sich die äußeren Abmessungen des Sensors auf der Scheibe reduzieren. Besonders vorteilhaft ist dabei, daß durch die trapezförmige Anordnung der Sender und Empfänger die äußeren Abmessungen des Sensorgehäuses trotzdem rechteckig gewählt werden können, so daß die Grundfläche unter optimaler Ausnutzung der Auflagefläche des Lichtleitkörpers in diese angeordnet werden kann. Eine rechteckige Auflagefläche bzw. Gehäuse wirkt sich darüber hinaus kostenreduzierend bei der Fertigung aus. Außerdem stellt die kleinere Auflagefläche des Lichtleitkörpers einen wesentlichen Montagevorteil dar, da bei konstanter Anpreßkraft der Anpreßdruck steigt und damit eine störende Blasenbildung zwischen dem Koppelmedium und der Scheibe vermieden werden kann.

Weiterhin erweist es sich als vorteilhaft, daß in der Anordnung jeweils zwei Sender bzw. zwei Empfänger auf den sich gegenüberliegenden parallelen Seiten angeordnet sind. Da nun vier Meßstrecken, d.h. vier sensitive Flächen des Sensors mit lediglich je zwei Sendern und Empfängern realisiert sind, ergibt sich ein wesentlicher Kostenvorteil.

### Zeichnungen

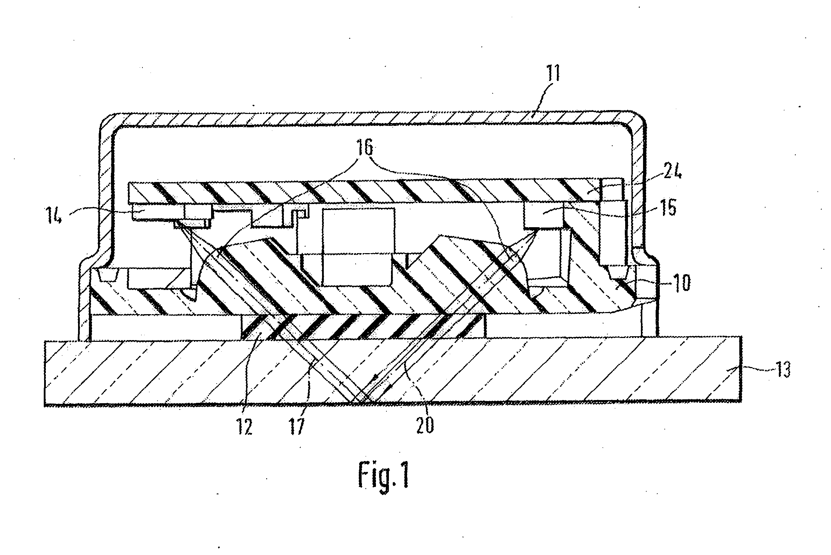

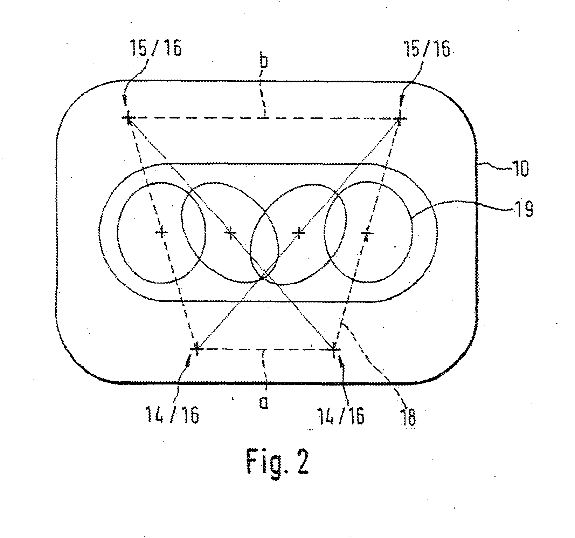

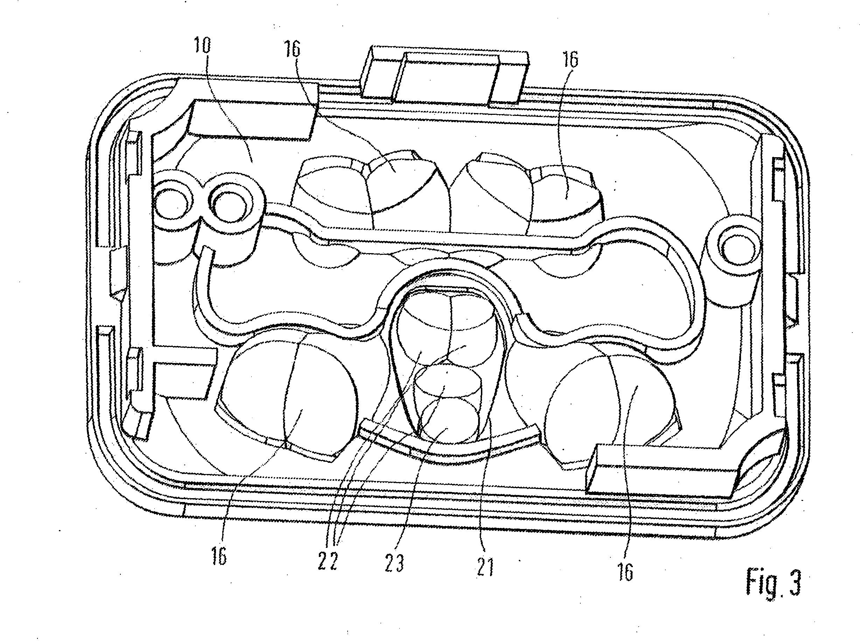

Ein Ausführungsbeispiel der Erfindung ist in den Figuren 1 bis 3 dargestellt und in der nachfolgenden Beschreibung näher erläutert. Es zeigt Figur 1 eine schematische Schnitt- Zeichnung einer möglichen Ausführungsform des optischen Teils der erfindungsgemäßen Sensoreinrichtung, Figur 2 zeigt eine schematische Zeichnung der Konturen einer möglichen Ausführungsform der erfindungsgemäßen Sensoreinrichtung und Figur 3 zeigt den Lichtleitkörper der erfindungsgemäßen Sensoreinrichtung nach Fig. 1 mit einer Empfangsoptik für eine Automatische Lichtsteuerung (ALS) in perspektivischer Darstellung.

### Beschreibung des Ausführungsbeispiels

Figur 1 zeigt einen Lichtleitkörper 10 einer im Schnitt dargestellten Sensoreinrichtung mit einem Sensorgehäuse 11. Die Auflagefläche des Lichtleitkörpers 10 ist beispielsweise durch den Kontakt desselben über das Koppelmedium 12, z. B. ein Silikonkissen mit einer Scheibe 13 gegeben. Allgemein entsprechen die äußeren Abmessungen des Lichtleitkörpers 10 etwa den Längen- und BreitenAbmessungen der Sensoreinrichtung, dabei kann das Sensorgehäuse 11 auch bauchig über die kontaktierte Auflagefläche des Lichtleitkörpers 10 auf der Scheibe 13 überstehen und darin verschiedene Elemente der Sensoreinrichtung, insbesondere Sender 14 und Empfänger 15, sowie eine Schaltungsplatine 24 aufnehmen.

Die Sensoreinrichtung ist beispielsweise auf der Innenseite der Scheibe 13, beispielsweise einer Frontscheibe eines Kraftfahrzeugs, befestigt. Nicht dargestellt ist die Befestigung des Sensorgehäuses 11 mit der Scheibe 13. Vorzugsweise ist der Lichtleitkörper 10 oder das Sensorgehäuse 11 durch Pressung auf der Scheibe 13 befestigt, wobei der Lichtleitkörper 10 die Funktion innehat, ein von einem Sender 14 abgestrahltes Senderlicht 17 in die Scheibe 13 einzukoppeln und das in der Scheibe 13 durch Totalreflektion oder Reflektion umgelenkte Senderlicht 20 an einer anderen vorbestimmten Stelle auf einen Empfänger 15 auszukoppeln. Dies geschieht hier an optischen Elementen 16, die als Linsen am Lichtleitkörper befestigt, vorzugsweise angeformt sind und die Strahlen des Senderlichtes 17,20 in die gewünschte Richtung bündeln, ab- oder umlenken.

Oberhalb des Lichtleitkörpers 10 ist in der dargestellten Schnittebene mindestens ein Licht ausstrahlender Sender 14 und ein Licht detektierende Empfänger 15 innerhalb des Sensorgehäuses 11 befestigt. Als Sender sind vorzugsweise Licht-emitierende-Dioden (LED) als Empfänger vorzugsweise Licht-detektierende-Dioden (LRD) zu verwenden, wobei die Senderstrahlung des Lichtes im infraroten (IR) oder im visuellen Bereich (VIS) liegt, jedoch sind auch beliebig andere Frequenzbereiche möglich. Als Empfänger kann auch ein in seinem Aufbau einer Leuchtdiode entsprechendes Empfängerelement verwendet werden, wodurch eine optimale Frequenzanpassung zwischen Sender 14 und Empfänger 15 erreicht werden kann. Als Material des Lichtleitkörpers 10 wird ein Werkstoff, hier ein Kunststoff gewählt, der für die Sendefrequenz der lichtemittierenden Dioden (LED) zwar transparent, für störendes Fremdlicht jedoch opak ist.

In Figur 2 ist eine mögliche Anordnung der Sender 14 und Empfänger 15 zu sehen. Die Sender 14 und Empfänger 15 der Sensoreinrichtung, sind nahe den optischen Elementen 16 aus Figur 1 plaziert. Sender 14, Empfänger 15 und die jeweils dazugehörigen optischen Elemente 16 spannen eine gestrichelt angedeutete Grundfläche 18 auf, welche erfindungsgemäß einem Trapez entspricht.

Auf einer ersten Parallelen des Trapezes sind zwei optische Elemente 16 nahe jeweils eines Senders 14 angeordnet. Dadurch, daß die optischen Elemente 16 hier als jeweils zwei nebeneinander angeordnete Linsen ausgebildet sind, ergeben sich für jeden Sender 14 zwei Meßstrecken in zwei Richtungen. Analog dazu sind die Empfänger 15 angeordnet. Die optischen Elemente 16 bestehen beispielsweise aus Linsen oder Spiegeln, welche auch ineinander übergehen können. Auch eine Lösung mit nur jeweils einer Linse ist möglich, da durch entsprechende Wahl der Abstände a und b der trapezförmigen Grundfläche 18 die entstehenden Fehlwinkel gering gehalten werden können.

Die Abstände a bzw. b zwischen den Sendern 14 und den Empfängern 15 sind durch die Wellenlänge der emittierenden Strahlung der Sender 14, die Dicke der Scheibe 13 und des Lichtleitkörpers 10, dem Brechungsindex der Scheibe 13, dem Eintrittswinkel und der Eintrittsstelle des Senderlichtes 17 in die Scheibe 13 bestimmt. Die Abstände sind derart gewählt, daß die in der Scheibe 13 eingekoppelte Strahlung des Senderlichts 17 je Meßstrecke ein einziges Mal an der außenliegenden Oberfläche der Scheibe 13 totalreflektiert wird und anschließend aus der Scheibe 13 ausgekoppelt und zum Empfänger 15 geleitet wird.
Die skizzierte sensitive Fläche 19 entspricht den Bereichen auf der benetzbaren Seite der Scheibe 13, an denen die Totalreflektion der Strahlung des Senderlichtes 17 bei unbenetzter Scheibe 13 erfolgt. Je nach Anordnung der Sender 14 und Empfänger 15 zur Scheibe 13, der Dicke der Scheibe 13 und der Form der optischen Elemente 16 haben die Reflexionsflächen des Senderlichtes 17 einen bestimmten Durchmesser. Die benannten Parameter sollen erfindungsgemäß jedoch so groß sein, daß aus den einzelnen Reflexionsflächen eine annähernd zusammenhängende sensitive Fläche 19 entsteht. Dies wird erfindungsgemäß dadurch erreicht, daß die Schnittpunkte der Mittelachsen der Strahlungskegel 20 der Sender 14 mit der benetzbaren Seite der Scheibe 13 auf einer Geraden liegen und etwa gleichmäßigen Abstand zueinander haben.

Bei mehr als einer gewünschten Totalreflektion an der benetzbaren Außenseite der Scheibe 13 ist der Abstand a bzw. b der Sender 14 und Empfänger 15 bzw. der jeweils zugehörigen optischen Elemente 16 entsprechend größer zu wählen und das Koppelmedium 12 nur an den Ein- und Auskoppelbereichen des Lichtes an der Scheibe 13 anzubringen.

In Figur 3 ist der Lichtleitkörper 10 der erfindungsgemäßen Sensoreinrichtung nach Fig. 1 dargestellt. Da das Trapez aus Sendern 14 und Empfängern 15 eine kürzere und eine längere Parallele umfaßt, ist - etwas aus dem Zentrum in Richtung der längeren Parallelen hin verschoben - eine Empfangsoptik 21 für eine automatische Lichtsteuerung (ALS) im Lichtleitkörper des Kraftfahrzeugs angeordnet. Diese Empfangsoptik 21 ist aus einem lichtdurchlässigem Material gefertigt, dessen Transparenzbereich im visuellen Bereich liegt.

Der Lichtleitkörper 10 und die Empfangsoptik 21 sind einteilig in einem Mehrkomponenten-Spritzgußverfahren hergestellt.

Die Empfangsoptik 21 selbst enthält hier vier, näherungsweise linsenförmig ausgebildete Elemente 22, 23. In einem Sensorgehäuse sind in deren Nähe ein oder mehrere hier nicht dargestellte Tageslichtsensoren angebracht, mit denen die Helligkeitsverhältnisse in der Umgebung des Fahrzeugs richtungssensitiv erfaßt werden können. Das eine erste Element 23 dieser linsenförmigen Elemente 22, 23 ist derart ausgebildet, daß es die Gesamthelligkeit in der Fahrzeugumgebung ohne Richtungssensitivität erfasst. Die übrigen drei, linsenförmigen zweiten Elemente 22, weisen mit schmalen Lichterfassungskegeln in drei verschiedene Richtungen vor dem Kraftfahrzeug um beispielsweise Tunneleinfahrten frühzeitig erkennen zu können, insbesondere zu einem Zeitpunkt zudem sich diese noch nicht genau in Fahrtrichtung befinden.

Als Material für den Lichtleitkörper 10 dient häufig Plexiglas (PMMA), da es kostengünstig und gut zu verarbeiten ist. Da jedoch Transparenz nur im Bereich des Senderlichts benötigt wird, ist auch ein anderer Kunststoff denkbar. Besonders geeignet ist auch ein Lichtleitkörpermaterial welches beispielsweise durch ein chemisches oder physikalisches Verfahren auf der der Scheibe 13 zugewandten Seite weichere und elastischere Eigenschaften aufweist als auf der der Scheibe 13 abgewandten Seite, da so das Koppelmedium 12 eingespart werden kann.

Um die Filtereigenschaften des Lichtleitkörpers 10 zu erreichen, können dem Material während des Herstellungprozesses des Lichtleiters 10 bestimmte Stoffe, insbesondere Rußpartikel, räumlich selektiv zugesetzt werden. So können beispielsweise nur die zur Funktion benötigten Bereiche für das Senderlicht 17 durchlässig sein. Eine analoge Vorgehensweise ist auch für das Koppelmedium 12 möglich.

In weiteren Varianten werden an jedem Eckpunkt des Trapezes ein Sender 14 und ein Empfänger 15 plaziert oder nur ein Sender 14 für das gesamte Trapez verwendet, wobei dann die optischen Elemente 16 reflektierende Eigenschaften aufweisen um trotzdem an mehreren Eckpunkten des Trapezes Senderlicht 17 in die Scheibe 13 einkoppeln zu können.

Die Empfangsoptik 21 kann eine Vielzahl von Elementen 22,23 umfassen, insbesondere ist eine Facetten - Struktur möglich, welche eine genauere Auswertung der Helligkeitsverteilung unter Berücksichtigung der räumlichen Struktur zuläßt. Dadurch können beispielsweise entgegenkommende Fahrzeuge erkannt werden. Auch hier können selbstverständlich Lichtfrequenzen gefiltert werden. Aufgrund dieser Fülle von Informationen kann beispielsweise zwischen Fern- und Abblendlicht automatisch oder halbautomatisch geschaltet werden.

## Patentansprüche

1. Sensoreinrichtung zur Erfassung einer Benetzung, insbesondere Niederschlag und/oder einer Verschmutzung, auf einer Scheibe (13), vorzugsweise einer Frontscheibe von Kraftfahrzeugen, mit mindestens zwei Sendern (14), mindestens zwei Empfängern (15) und mindestens einem Lichtleitkörper (10) anordenbar zwischen Scheibe (13) und Sendern (14) bzw. Empfängern (15) für eine von den mindestens zwei Sendern (14) abgestrahlte Strahlung, **dadurch gekennzeichnet, daß** weiterhin eine Empfangsoptik (21) für eine automatische Lichtsteuerung im Lichtleitkörper (10) angeordnet ist, die aus lichtdurchlässigem Material gefertigt und zusammen mit dem Lichtleitkörper (10) in einem Mehrkomponenten-Spritzgußverfahren hergestellt ist.

2. Sensoreinrichtung nach Anspruch 1, **dadurch gekennzeichnet, daß** zwischen Sender (14) und Empfänger (15) die Strahlung mindestens einmal an einer Fläche der Scheibe (13) reflektiert wird, wobei die mindestens zwei Sender (14) Strahlung in verschiedene Richtungen abgeben und die dadurch entstehenden Reflexionsflächen eine zumindest annähernd zusammenhängende sensitive Fläche (19) ergeben.

3. Sensoreinrichtung nach Anspruch 1, **dadurch gekennzeichnet, daß** mindestens ein Sender (14) Strahlung in zwei Richtungen auf zwei Empfänger (15) ausstrahlt.

4. Sensoreinrichtung nach Anspruch 1 oder 3, **dadurch gekennzeichnet, daß** mindestens ein Empfänger (15) Strahlung aus zwei Richtungen von zwei Sendern (14) empfängt.

5. Sensoreinrichtung nach einem der vorhergehenden Ansprüche, **dadurch gekennzeichnet, daß** die Anzahl der Sender (14) und Empfänger (15) jeweils zwei beträgt, und dass Sender, Empfänger und die jeweils dazugehörigen optischen Elemente (16) eine Grundfläche aufspannen, welche einem Trapez entspricht.

6. Sensoreinrichtung nach Anspruch 5, **dadurch gekennzeichnet, daß** das Trapez ein symmetrisches Trapez ist wobei die Abstände der zwei Sender (14) zueinander von den Abständen der zwei Empfänger (15) zueinander so verschieden sind, daß der eine Abstand etwa das doppelte des anderen Abstands beträgt.

7. Sensoreinrichtung nach einem der vorhergehenden Ansprüche, **dadurch gekennzeichnet, daß** die Sensoreinrichtung vier Meßstrecken aufweist.

8. Sensoreinrichtung nach Anspruch 5, **dadurch gekennzeichnet, daß** die Sender (14) auf der ersten, in Einbaulage unteren Parallelen und die Empfänger (15) auf der zweiten, in Einbaulage oberen Parallelen des Trapezes angeordnet sind.

9. Sensoreinrichtung nach einem der vorhergehenden Ansprüche 5, 6 und 8, **dadurch gekennzeichnet, daß** die Zentren der Reflexionsflächen der Strahlungskegel (20) der Sender (14) in der Scheibe (13) mit zumindest annähernd gleichmäßigen Abstand nebeneinander angeordnet sind, vorzugsweise auf einer Linie, welche sich zwischen den beiden Parallelen des Trapezes befindet.

10. Sensoreinrichtung nach einem der vorhergehenden Ansprüche, **dadurch gekennzeichnet, daß** Lichtleitkörper (10), Sender (14) und Empfänger (15) derart ausgebildet und angeordnet sind, daß in der Scheibe (13) lediglich eine einzige Totalreflexion des Senderlichtes (17) auftritt.

11. Sensoreinrichtung nach einem der Ansprüche 1 bis 10, **dadurch gekennzeichnet, daß** jeweils einem Sender (14) bzw. Empfänger (15) am Lichtleitkörper (10) ein optisches Element (16) zugeordnet ist, welches mehrere, insbesondere zwei, getrennte Linsen aufweist.

12. Sensoreinrichtung nach Anspruch 11, **dadurch gekennzeichnet, daß** die Linsen ineinander übergehen.

13. Sensoreinrichtung nach einem der Ansprüche 1 bis 10, **dadurch gekennzeichnet, daß** jeweils einem Sender (14) bzw. Empfänger (15) am Lichtleitkörper (10) ein optisches Element (16) zugeordnet ist, welches eine einzige Linse aufweist.

14. Sensoreinrichtung nach einem der Ansprüche 6 bis 13, **dadurch gekennzeichnet, daß** in dem Lichtleitkörper (10) zentrisch oder etwas zur längeren Parallelen des Trapezes hin verschoben die Empfangsoptik (21) für eine Automatische Lichtsteuerung (ALS) angeordnet ist.

## Claims

1. Sensor device for detecting wetting, in particular precipitation and/or soiling, on a window pane (13), preferably a windscreen of motor vehicles, having at least two transmitters (14), at least two receivers (15) and at least one light-guiding element (10) which can be arranged between window pane (13) and transmitters (14) or receivers (15) for a radiation emitted by the at least two transmitters (14), **characterized in that**, furthermore, arranged in the light-guiding element (10) is a receiving optics (21) for automatic light control which is fabricated from light-transmitting material and is produced together with the light-guiding element (10) in a multicomponent injection moulding method.

2. Sensor device according to Claim 1, **characterized in that** the radiation is reflected at least once at a surface of the window pane (13) between transmitter (14) and receiver (15), the at least two transmitters (14) outputting radiation in various directions, and the reflection surfaces resulting therefrom yielding an at least approximately coherent sensitive surface (19).

3. Sensor device according to Claim 1, **characterized in that** at least one transmitter (14) emits radiation in two directions onto two receivers (15).

4. Sensor device according to Claim 1 or 3, **characterized in that** at least one receiver (15) receives radiation from two directions from two transmitters (14).

5. Sensor device according to one of the preceding claims, **characterized in that** the number of the transmitters (14) and receivers (15) is in each case two, and **in that** transmitters, receivers and the respectively associated optical elements (16) define a base surface which corresponds to a trapezium.

6. Sensor device according to Claim 5, **characterized in that** the trapezium is a symmetrical trapezium, the mutual spacings of the two transmitters (14) differing from the mutual spacings of the two receivers (15) such that one spacing is approximately twice the other spacing.

7. Sensor device according to one of the preceding claims, **characterized in that** the sensor device has four measuring paths.

8. Sensor device according to Claim 5, **characterized in that** the transmitters (14) are arranged on the first parallel of the trapezium, which is at the bottom in the installed position, and the receivers (15) are arranged on the second parallel of the trapezium, which is at the top in the installed position.

9. Sensor device according to one of the preceding claims 5, 6 and 8, **characterized in that** the centres of the reflection surfaces of the radiation cones (20) of the transmitters (14) are arranged next to one another in the window pane (13) with at least an approximately uniform spacing, preferably on a line which is located between the two parallels of the trapezium.

10. Sensor device according to one of the preceding claims, **characterized in that** light-guiding elements (10), transmitters (14) and receivers (15) are designed and arranged in such a way that only a single total reflection of the transmitter light (17) occurs in the window pane (13).

11. Sensor device according to one of Claims 1 to 10, **characterized in that** in each case a transmitter (14) or receiver (15) is assigned on the light-guiding element (10) an optical element (16) which has a plurality of, in particular two, separate lenses.

12. Sensor device according to Claim 11, **characterized in that** the lenses merge into one another.

13. Sensor device according to one of Claims 1 to 10, **characterized in that** in each case a transmitter (14) or receiver (15) is assigned on the light-guiding element (10) an optical element (16) which has a single lens.

14. Sensor device according to one of Claims 6 to 13, **characterized in that** the receiving optics (21) is arranged for automatic light control (ALS) in the light-guiding element (10) in a central fashion or displaced somewhat towards the longer parallel of the trapezium.

## Revendications

1. Dispositif de détection destiné à détecter la présence d'un liquide, en particulier d'une précipitation et/ou d'un encrassement, sur une vitre (13), de préférence le pare-brise d'un véhicule automobile, et présentant au moins deux émetteurs (14), au moins deux récepteurs (15) et au moins un corps (10) conducteur de lumière apte à être disposé entre la vitre (13) et les émetteurs (14) et récepteurs (15) pour un rayonnement émis par les deux ou plusieurs émetteurs (14),
**caractérisé en ce**
**qu'**en outre une optique de réception (21) qui permet une commande automatique de la lumière est disposée dans le corps (10) conduisant la lumière, l'optique étant réalisée en un matériau transparent et étant fabriquée en même temps que le corps (10) conducteur de lumière par un procédé de moulage par injection de plusieurs composants.

2. Dispositif de détection selon la revendication 1, **caractérisé en ce que** le rayonnement est réfléchi au moins une fois sur une surface de la vitre (13) entre les émetteurs (14) et les récepteurs (15), les deux ou plusieurs émetteurs (14) émettant le rayonnement dans différentes directions et les surfaces réfléchissantes ainsi formées formant une surface sensible (19) au moins sensiblement continue.

3. Dispositif de détection selon la revendication 1, **caractérisé en ce qu'**au moins un émetteur (14) émet un rayonnement dans deux directions vers deux récepteurs (15).

4. Dispositif de détection selon la revendication 1 ou 3, **caractérisé en ce qu'**au moins un récepteur (15) reçoit un rayonnement dans deux directions depuis deux émetteurs (14).

5. Dispositif de détection selon l'une des revendications précédentes, **caractérisé en ce que** le nombre des émetteurs (14) et des récepteurs (15) est de deux et **en ce que** les émetteurs, les récepteurs et les éléments optiques (16) qui en font partie sous-tendent une surface de base qui correspond à celle d'un trapèze.

6. Dispositif de détection selon la revendication 5, **caractérisé en ce que** le trapèze est un trapèze symétrique, les distances entre les deux émetteurs (14) étant différentes des distances entre les deux récepteurs (15) de telle sorte qu'une des distances représente sensiblement le double de l'autre distance.

7. Dispositif de détection selon l'une des revendications précédentes, **caractérisé en ce que** le dispositif de détection présente quatre parcours de mesure.

8. Dispositif de détection selon la revendication 5, **caractérisé en ce que** les émetteurs (14) sont disposés sur la première parallèle du trapèze située dans le bas en position de montage et les récepteurs (15) sur la deuxième parallèle située en position supérieure en position de montage.

9. Dispositif de détection selon l'une des revendications 5, 6 et 8 qui précèdent, **caractérisé en ce que** les centres des surfaces de réflexion des cônes de rayonnement (20) des émetteurs (14) sont disposés dans la vitre (13) à une distance mutuelle au moins sensiblement identique, de préférence sur une ligne qui est située entre les deux parallèles du trapèze.

10. Dispositif de détection selon l'une des revendications précédentes, **caractérisé en ce que** les corps (10) conducteurs de lumière, les émetteurs (14) et les récepteurs (15) sont configurés et disposés de telle sorte qu'une seule réflexion totale de la lumière (17) de l'émetteur a lieu dans la vitre (13).

11. Dispositif de détection selon l'une des revendications 1 à 10, **caractérisé en ce qu'**un élément optique (16) est associé à chaque émetteur (14) et à chaque récepteur (15) sur le corps (10) conducteur de lumière et présente plusieurs et en particulier deux lentilles séparées.

12. Dispositif de détection selon la revendication 11, **caractérisé en ce que** les lentilles se prolongent l'une dans l'autre.

13. Dispositif de détection selon l'une des revendications 1 à 10, **caractérisé en ce qu'**un élément optique (16) qui présente une seule lentille est associé à chaque émetteur (14) et à chaque récepteur (15) sur le corps (10) émetteur de lumière.

14. Dispositif de détection selon l'une des revendications 6 à 13, **caractérisé en ce que** l'optique de réception (21) est disposée au centre du corps (10) conducteur de lumière ou est déplacée légèrement vers la longue parallèle du trapèze, de manière à permettre une commande automatique de la lumière (ALS).
